# EUROPEAN PATENT SPECIFICATION

(11) **EP 2 655 182 B1**
(45) Date of publication and mention of the grant of the patent: **15.01.2020**
(21) Application number: 11850961.1
(22) Date of filing: 21.09.2011
(51) Int. Cl.: B63H 9/06, B63B 39/06, B63B 15/00

(54) **A SHIP'S HULL AND A SHIP INCLUDING SUCH A HULL**
SCHIFFSRUMPF UND SCHIFF MIT EINEM SOLCHEN RUMPF
COQUE DE NAVIRE ET NAVIRE ÉQUIPÉ D'UNE TELLE COQUE

(30) Priority: 22.12.2010 NO 20101795
(43) Date of publication of application: 30.10.2013
(73) Proprietor: Lade AS, 6005 Ålesund (NO)
(72) Inventor: LADE, Terje, 6005 Ålesund (NO)
(74) Representative: Zacco Norway AS
(86) International application number: PCT/NO2011/000267
(87) International publication number: WO 2012/087146

(56) References cited:
- WO-A1-98/00333
- FR-A1- 2 934 560
- JP-A- 58 180 390
- JP-U- S6 095 398
- KR-A- 20080 094 389
- US-A- 2 804 038
- US-A- 3 425 383
- US-A- 4 344 377
- US-A- 5 406 902
- US-A1- 2005 126 464
- US-A1- 2009 311 924

## Description

The present invention relates to a ship's hull and to a ship including said ship's hull. More specifically, the invention relates to a ship's hull and an associated ship which utilises wind energy for propulsion, a substantial portion of the ship's above-water hull being designed to function as a sail.

Sustainable sea transport is dependent on the development of new technology that is capable of utilising the renewable resources found in the ocean. Wind is one such resource, and it arises from solar energy and the earth's rotation. Meteorology provides information about wind strength and wind direction, and therefore wind energy has become predictable. By using computerised weighting of meteorological data, a computer program can compute the best route across the sea for a ship in order to harness the available wind energy. This is called weather routing, and is commercially available today. Thus, it will be easy for the captain on board a ship according to the invention to select the best course in order to harness this energy for propulsion of the ship. In addition to today's advanced meteorological tools, the term "trade winds" is already known from the days of sailing ships, and designates routes between the different continents that are known from experience to be particularly suitable as regards wind direction and strength.

In US 3425383A a hydrofoil is described wherin high aspect ratio displacement foils which buoyantly support craft above water, craft having combinations of displacement and dynamic hydrofoils, methods for operating craft with displacement and dynamic hydrofoils, and symmetrical foils and external flaps are described.

An object of the present invention is therefore to provide a ship which permits sea transport with virtually zero emissions into the air and the sea.

The present invention is defined by a ship's hull according to claim 1. Furthermore, the aforementioned and other objects are sought to be achieved by means of a ship according to dependent claim 11, the ship including a ship's hull wherein a substantial portion of the hull is above its waterline, wherein the hull above the waterline is designed essentially as a section of an aerofoil of the NACA foil type which is symmetrical in relation to the hull's centre line and where the leading edge of the aerofoil is facing in the direction of the front of the ship in order, in relative wind, to generate an aerodynamic lift that produces propulsion of the ship within an angular sector of the ship's course or direction of propulsion, the aerodynamic lift being balanced out by a hydrodynamic lift generated under the waterline.

A ship with a hull designed in accordance with the present invention, and which moves in the relative wind will, as mentioned above, generate an aerodynamic lift which produces propulsion within an angular sector of the course. This is the ship's wind power system. The relative wind, measured on board the ship, is determined by the ship's course and speed, and the direction and strength of the true wind. With an electrical propulsion system in addition, which also sets the ship in motion from stationary and takes it up to the desired speed, it is possible to exploit the generated lift for propulsion, and thus save fuel. It is a dynamic system which maintains a constant speed for the ship.

The aerodynamic lift (L) involved here is like a vector with a point of attack at the centre of gravity of the above-water hull. To obtain equilibrium, the aerodynamic lift, as mentioned above, is balanced out by a hydrodynamic lift which, in an advantageous embodiment of the invention, is generated by four hydrofoils arranged below the waterline, two hydrofoils being arranged parallel on each side of the centre line of the ship's hull, and symmetrical in relation to the centre of gravity of the underwater hull, and where each hydrofoil is edged 45° inwards and downwards towards the centre line of the ship's hull. The centre of gravity of the underwater hull is thus also the pivot point of the ship.

Therefore, it must be that:
- Aerodynamic lift x arm 1 = hydrodynamic lift x arm v
wherein
- Arm 1 = distance from centre of gravity of above-water hull to centre of gravity of underwater hull
- Arm v = distance from centre of gravity of hydrofoils to centre of gravity of underwater hull.

In a developed design model, arm 1 is equal to arm v, and projected area of the hydrofoils is set at about 5% of the "sail area", i.e., projected face of the hull in the longitudinal direction of the hull.

In order to obtain a hydrodynamic lift, the hydrofoils have an angle of attack of 1-5°, called the leeway angle, which will be produced dynamically. Thus, a dynamic stabilisation of the ship's rolling is also obtained.

The centre of gravity of the ship's above-water hull must therefore lie on a line perpendicular to the centre line of the ship's hull, immediately above the ship's pivot point.

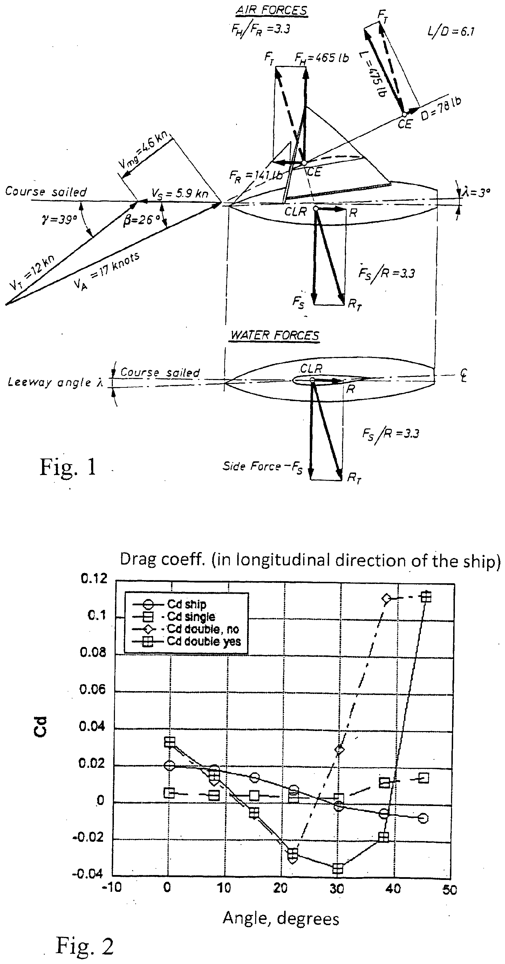

As an example of air forces and water forces, there is shown in attached Figure 1 a representation, taken from Aero-hydrodynamics of Sailing by Czeslav A. Marchaj, ISBN 0-396-07739-0, of forces acting on a sailing boat set in motion by the true wind, V_{T}, and where the corresponding wind recorded on board the boat will be the relative wind V_{A}. The angle between the vector for the boat's speed Vs and the relative wind V_{A} will be the angle β, as can be seen from the figure.

For the side forces on the centre line of the boat to be in equilibrium, it must be that
- F_{S} = F_{H}

Fs arises in that a vertical hydrofoil (also called "keel" on sailing boats), having a specific area is given an angle of attack, here called the "leeway angle". The hydrofoil in the form of the keel has a symmetrical form (NACA) about its horizontal centre line, parallel to the boat's centre line. The vertical centre line generally lies 25% behind the leading edge, and runs through the centre of gravity of the underwater hull. This is the pivot point of the boat.

F_{H} is the horizontal heeling force which will create a heeling moment
- M_{H} = F_{H} x arm
wherein the arm is the vertical distance from the centre of gravity of the sail to the centre of gravity of the underwater hull.

FS is a horizontal force which acts at 90° to the centre line of the hydrofoil, through the centre of gravity of the hydrofoil. If there is no distance horizontally between the centre line of the hydrofoil and the centre line of the underwater hull (as in the case of a centre-mounted keel), there will be no righting moment
- MS = FS x arm

The righting moment must be equal to the heeling moment in order to obtain balance
- MS = MH

The arm here will be the distance from the centre line of the hydrofoil to the centre line of the underwater hull, which in the present case with a centre-mounted keel will be 0.

Therefore, on sailing boats with one hull, the weight of the hydrofoil (keel) is used as righting moment. Displacement can also be used as righting moment if it is not possible or desirable to use weight, as in sailing boats with multiple hulls. Displacement is also used as righting moment in larger vessels with one hull.

If the hydrofoil is edged or inclined, for example, 45° inwards towards the centre line of the underwater hull, and is placed on an arm at a given distance from the centre line, it will generate a force. This force, multiplied by the arm will be a dynamic righting moment, in that there will be a speed and an angle of attack, the leeway angle. Depending on which side of the hydrofoil Fs is generated, above/below, through the starboard or port leeway angle, Fs will act at 90° to the vertical centre line of the hydrofoil, through the centre of gravity
- M_{S} = F_{S} x arm

It is thus possible to generate a righting moment with just one symmetrical hydrofoil on a horizontal arm at a given distance from the centre line of the vessel. This vessel is called a "Proa", and it functions with the wind on both the starboard and the port side.

On larger vessels, the aforementioned would be impractical, and therefore there are generally two inclined hydrofoils, as on a trimaran.

In the aforementioned advantageous embodiment of the invention, it is intended to have four inclined hydrofoils which generate a righting moment, in addition to some displacement for practical and safety reasons, and which give an essentially trimaran-shaped underwater hull.

Measured in the centre of the underwater hull, a length/breadth ratio of 8.3: 1 is advantageous because it appears that there is a limit at 8:1 with regard to creating unfavourable turbulent flow around the stern of the vessel, which gives an increased drag in the sea.

With a length/breadth ratio as given above, the vessel will have little sideways stability, and the trimaran form of the aforementioned advantageous embodiment of the invention has been chosen to make up for this fact, and gives such good stability and low drag through the sea that none of today's merchant vessels can boast anything similar.

Calculations show that a large merchant vessel where the above-water hull and the superstructure are designed without giving any thought to aerodynamics and wind, such as the vehicle carrier Maersk Taiyo with a main engine of 16000 hk, at a ship speed of 9 m/s and a wind strength of 8 m/s from an unfavourable direction could experience a braking effect of up to 907 hk because of the wind. This braking effect corresponds to an oil consumption of up to 2.8 tonnes/day, which is highly significant as regards the environment and costs.

Similar calculations for a preferred embodiment of the invention, with an aerofoil area of 5580 m² and a ship's speed Vs of 7 m/s and a true wind strength of 12m/s from an angle of attack β equal to 43° shows that it is possible to generate 13570 hk propulsion for the ship from wind power.

That it is possible, with the aid of wind power, to obtain huge propulsion forces, which may also give very high speeds is already well known, and it may be mentioned that the world record for ice sailing is 65 m/s (235 km/h), which was set at a true wind speed of V_{T} equal to 14.5 m/s and an angle of attack β equal to 14°.

Wind tunnel tests carried out at the Norwegian University of Science and Technology - NTNU ("Wind tunnel study of the above-water part of a ship's hull", by Professor Lars Sætran, October 2010) on a hull with a symmetrical NACA foil (NACA 16-018) cut off at 95% of the chord length concludes that (quote): "the model test of the hull with NACA foil gives a component of wind forces that act in the ship's direction of travel in a sector of from about 13 to 39 degrees wind relative to the longitudinal axis of the ship".

In the aforementioned study, it was also documented how important it is to establish a maximum two-dimensional flow over the symmetrical NACA foil section which constitutes the tested hull in order to obtain an optimal effect of the hull shape with regard to generating wind forces for propulsion of the ship, and which in the study was done by doubling the length of the symmetrical NACA foil-shaped aerofoil for one of the tested models. It is also previously known from the technical literature that a two-dimensional flow profile can be obtained over an aerofoil by arranging end plates at both ends of the aerofoil, perpendicular to the longitudinal direction of the aerofoil. For a ship where the aerofoil extends essentially down to the water surface, the water surface will inevitably constitute such an end plane or surface, and it is therefore in connection with the opposite, other end of the aerofoil towards the top of the ship that it will be most important to arrange such an end plate or face. Such side plates or faces are extra important when there is a small aspect ratio, where the length of the wing section is small in relation to its chord length, as will inevitably be the case in a ship's hull according to the invention, unlike the wing of an aircraft which has a high aspect ratio.

Test data from the aforementioned study is shown in Fig. 2, where it can be seen that with the doubled hull hight and with tripping (shown by "paned window"-shaped symbols), a positive component of force was obtained (shown as negative drag coefficient, Cd, and where it is precisely this negative drag that is used for propulsion in sailing) with a relative wind from 13° to 39°, and with a maximum force at 30°. Without tripping, shown by "diamond"-shaped symbols, the result was slightly poorer, but a significant positive component of force was still obtained. For the two other test models (respectively a traditional ship's hull and a single NACA foil-shaped wing section) indicated by the two other symbols, as can be seen from the figure, no similar positive component of force was measured.

It should also be mentioned that the Applicant has had access to log data entered on board a vehicle carrier, M/S Høegh Trooper, of 21000 dead weight tonnes (DWT) from a crossing from Jacksonville in Florida to Valletta on Malta in the period from 3 September - 15 September 2010, and then on to Korea and back to Europe, where this log data shows that the ship was within a sector of 13-39° more than 45% of the crossing time. If the course had been adjusted by up to 10%, this figure would have been 59%. This means that with the best of the test models from the tests carried out by NTNU, the negative wind forces would have been turned to positive about 59% of the time.

A ship according to an advantageous embodiment is shown in the following attached figures, where the length is 180.5 m, the height is 33 m and the breadth is 34.2 m. This gives a sail area of 5957 m². With a relative wind of 19 m/s, 30° to the course, this suggests that this embodiment of the invention could sail without use of engine power. It was conditions such as these that M/S Hoegh Trooper had on the ninth day of the crossing.

According to the invention, there is therefore provided a ship's hull, wherein a portion of the ship's hull is above its waterline, wherein the hull above the waterline is designed as a section of an aerofoil of the NACA foil type which is symmetrical relative to the centre line of the ship's hull and where the leading edge of the aerofoil is facing in the direction of the front of the ship, in order, with relative wind, to generate an aerodynamic lift which produces propulsion for the ship within an angular sector of the ship's course or direction of propulsion, the aerodynamic lift being balanced out by a hydrodynamic lift generated below the waterline.

According to the invention, there is further provided a ship with a ship's hull as disclosed above.

A non-limiting embodiment of the invention is described in further detail below with reference to the attached drawings, wherein:
Figure 1 is a representation taken from Aero-hydrodynamics of Sailing by Czeslav A. Marchaj, ISBN 0-396-07739-0, of the forces acting on a sailing boat set in motion by the true wind V_{T}, and where the corresponding wind registered on board in the boat will be the relative wind V_{A}. The angle between the vector for the boat's speed Vs and for the relative wind V_{A} will be the angle β;
Figure 2 is a graph of test results from a wind tunnel experiment carried out at NTNU ("Wind tunnel study of the above-water part of a ship's hull", by Professor Lars Sætran, October 2010); and
Figures 3-7 are respectively, side, perspective, sectional, front and rear views of an advantageous embodiment of the invention, where Figure 5 is a section taken along the line A-A in Figure 3, and where the line A-A coincides essentially with the ship's waterline.

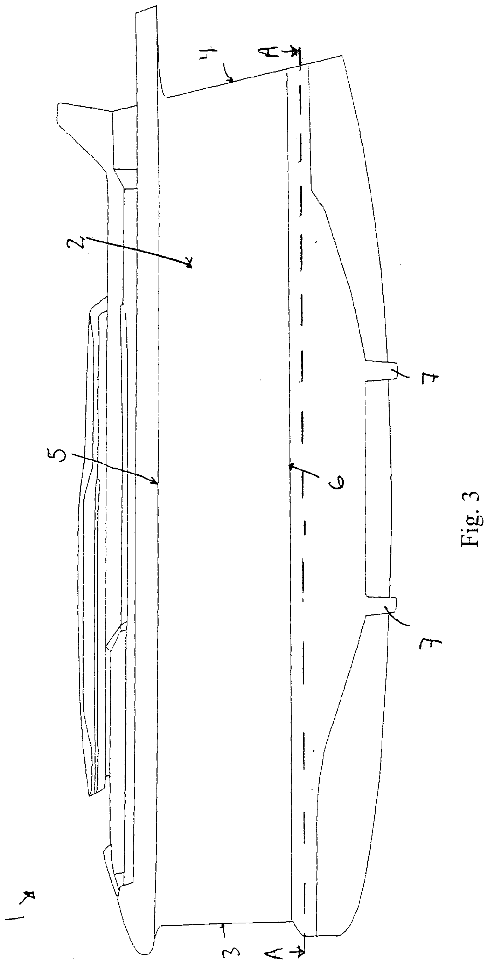

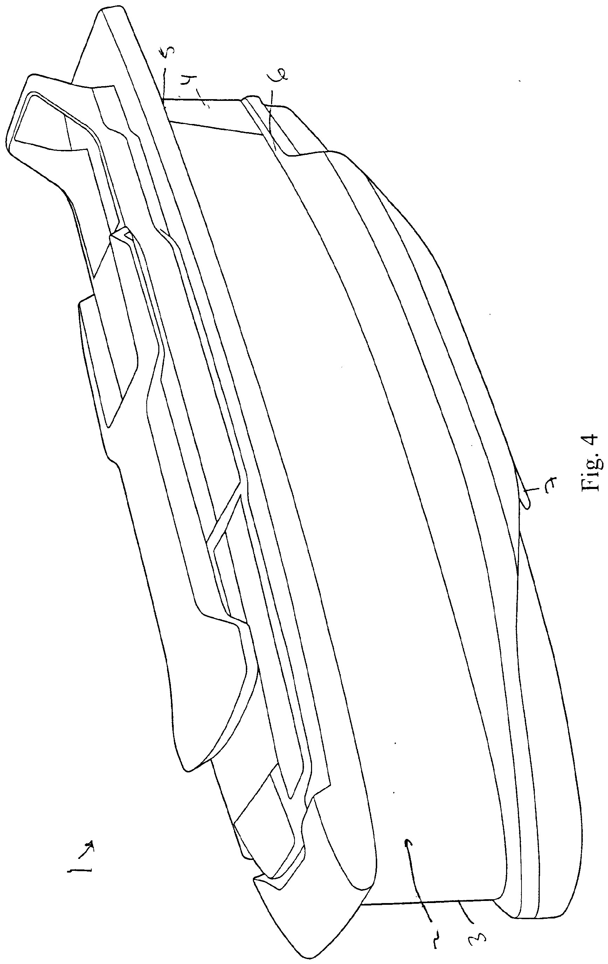

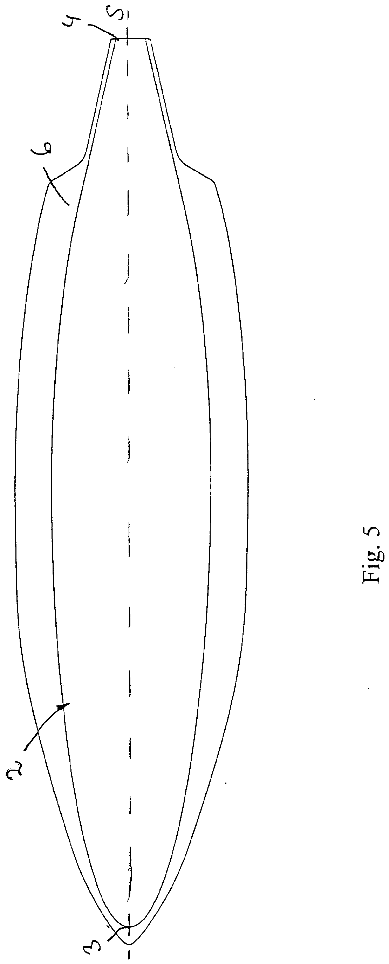

Figures 3-7 shows a ship 1 according to the invention where a substantial portion of the ship's hull above the waterline is designed essentially as a section of an aerofoil 2 of the NACA foil type which is symmetrical in relation to the centre line S of the ship's hull and where the leading edge 3 of the aerofoil 2 is facing in the direction of the front of the ship, in order, with relative wind, to generate an aerodynamic lift which produces propulsion for the ship 1 within an angular sector of the ship's 1 course or direction of propulsion, the aerodynamic lift being balanced out by a hydrodynamic lift generated below the waterline.

The NACA foil is advantageously of the type NACA 16-018, with the trailing edge 4 of the aerofoil section 2 cut off at 95% of the chord length of the aerofoil.

The aerofoil section 2 is delimited by respective upper 5 and lower 6 faces above the waterline which project at an angle out from the aerofoil section's 2 surface over a substantial part of the periphery of the aerofoil section 2, and especially along the leading edge 3 and sides of the aerofoil section 2, the angle advantageously being greater than or equal to 90°.

The hydrodynamic lift is advantageously generated by a plurality of hydrofoils 7 arranged below the waterline, where, as shown, four hydrofoils 7 are symmetrically arranged in relation to the centre line S of the ship's hull and in relation to the centre of gravity of the ship's underwater hull, and where said centre of gravity constitutes the pivot point of the ship 1.

In a non-illustrated alternative embodiment, two hydrofoils are symmetrically arranged in relation to the centre line of the ship's hull and at the centre of gravity of the ship's underwater hull, said centre of gravity forming the ship's pivot point.

The hydrofoils 7 are advantageously arranged at an angle of about 45° downwards and inwards towards the centre of the ship's hull relative to a vertical plane through the centre line S of the ship's hull, and where the centre of gravity of the ship's 1 above-water hull lies on a line at right angles to the centre line S of the ship's 1 hull, immediately above the pivot point of the ship 1.

Furthermore, the total projected area of the hydrofoils 7 advantageously constitutes about 5% of the projected area of the symmetrical aerofoil section in the longitudinal direction of the ship's hull.

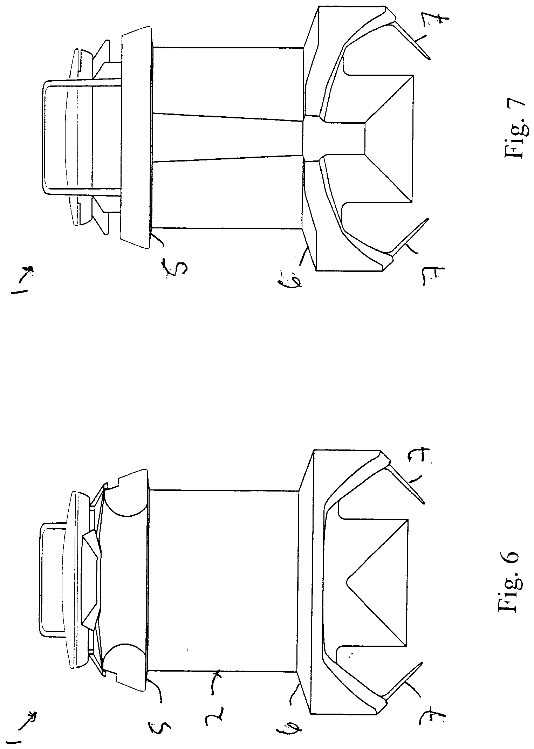

As can be seen in particular from Figs. 6 and 7, the ship's hull is advantageously of the trimaran type.

The ship 1 according to the invention advantageously includes a non-illustrated variable-speed electric propulsion system to supplement the ship's 1 wind-based propulsion system.

## Claims

1. A ship's hull, wherein a portion of the ship's hull is above its waterline, wherein the hull above the waterline is designed essentially as a section of an aerofoil of the NACA foil type which is symmetrical to the centre line (S) of the ship's hull and where the leading edge (3) of the aerofoil section (2) is facing in the direction of the front of the ship (1), in order, with relative wind, to generate an aerodynamic lift that produces propulsion for the ship (1) within an angular sector of the angle of attack (β) between the relative wind and the ship's (1) course or direction of propulsion, the aerodynamic lift being balanced out by a hydrodynamic lift generated below the waterline, and the aerofoil section (2) is delimited by respective upper (5) and lower (6) faces above the waterline which project at angles out from the surface of the aerofoil section (2) across a part of the periphery of the aerofoil section, and at least along the leading edge (3) and part of the sides of the aerofoil section (2).

2. A ship's hull according to claim 1, **characterised in that** the NACA foil is of the type NACA 16-018, and with the trailing edge (4) of the aerofoil section (2) cut off at 95% of the chord length of the aerofoil section (2).

3. A ship's hull according to claim 1 or 2, **characterised in that** the angles are greater than or equal to 90°.

4. A ship's hull according to claim 1 or 2, **characterised in that** the hydrodynamic lift is generated by a plurality of hydrofoils (7) arranged below the waterline.

5. A ship's hull according to claim 4, **characterised by** four hydrofoils (7) symmetrically arranged in relation to the centre line (S) of the ship's hull and in relation to the centre of gravity of the ship's (1) underwater hull, said centre of gravity constituting the pivot point of the ship (1).

6. A ship's hull according to claim 4, **characterised by** two hydrofoils (7) symmetrically arranged in relation to the centre line of the ship's hull and at the centre of gravity of the ship's (1) underwater hull, said centre of gravity constituting the ship's (1) pivot point.

7. A ship's hull according to claim 5 or 6, **characterised in that** the hydrofoils (7) are arranged at an angle of about 45° downwards and inwards towards the centre of the ship's hull in relation to a vertical plane through the centre line (S) of the ship's hull.

8. A ship's hull according to claim 5 or 6, **characterised in that** the centre of gravity of the ship's (1) above-water hull lies on a line at right angles to the centre line (S) of the ship's hull, immediately above the ship's (1) pivot point.

9. A ship's hull according to any one of claims 4 to 8, **characterised in that** the total projected area of the hydrofoil (7) constitutes about 5% of the projected area of the aerofoil section (2) in the longitudinal direction of the ship's hull.

10. A ship's hull according to claim 1 or 2, **characterised by** being of the trimaran type.

11. A ship (1) including a ship's hull according to any one of claims 1-10.

12. A ship according to claim 11, **characterised by** including a variable-speed electric propulsion system to supplement the ship's wind-based propulsion system.

13. A ship according to claim 11 or 12, **characterised in that** the ship's (1) length is 180.5 m, the ship's (1) height is 33 m and the ship's (1) breadth is 34.2 m.

## Patentansprüche

1. Schiffsrumpf, wobei ein Teil des Schiffsrumpfes oberhalb seiner Wasserlinie ist, wobei der Rumpf oberhalb der Wasserlinie im Wesentlichen als ein Abschnitt eines Flügels des NACA-Flügeltyps ausgeformt ist, der zur Mittellinie (S) des Schiffsrumpfes symmetrisch ist, und wobei die Vorderkante (3) des Flügelabschnitts (2) in Richtung der Front des Schiffs (1) zeigt, um mit relativem Wind einen aerodynamischen Auftrieb zu erzeugen, der Antrieb für das Schiff (1) in einem Winkelsektor des Anstellwinkels (β) zwischen dem relativen Wind und dem Kurs oder der Richtung des Antriebs des Schiffes (1) erzeugt, wobei der aerodynamische Auftrieb durch einen hydrodynamischen Auftrieb, der unterhalb der Wasserlinie erzeugt wird, ausgeglichen wird, und der Flügelabschnitt (2) durch eine jeweilige obere (5) und untere (6) Fläche oberhalb der Wasserlinie begrenzt wird, die von der Oberfläche des Flügelabschnitts (2) quer über einen Teil des Umfangs des Flügelabschnitts und mindestens entlang der Vorderkante (3) und einem Teil der Seiten des Flügelabschnitts (2) in Winkeln hervorstehen.

2. Schiffsrumpf nach Anspruch 1, **dadurch gekennzeichnet, dass** der NACA-Flügel des NACA-Typs 16-018 ist, und wobei die Hinterkante (4) des Flügelabschnitts (2) bei 95% der Sehnenlänge des Flügelabschnitts (2) abgeschnitten ist.

3. Schiffsrumpf nach Anspruch 1 oder 2, **dadurch gekennzeichnet, dass** die Winkel größer als oder gleich 90° sind.

4. Schiffsrumpf nach Anspruch 1 oder 2, **dadurch gekennzeichnet, dass** der hydrodynamische Auftrieb durch eine Mehrheit von Tragflügeln (7), die unterhalb der Wasserlinie angeordnet sind, erzeugt wird.

5. Schiffsrumpf nach Anspruch 4, **gekennzeichnet durch** vier Tragflügel (7), die im Verhältnis zur Mittellinie (S) des Schiffsrumpfes und im Verhältnis zum Gleichgewichtspunkt des unter Wasser liegenden Rumpfes des Schiffes (1) symmetrisch angeordnet sind, wobei der Gleichgewichtspunkt den Drehpunkt des Schiffes (1) ausmacht.

6. Schiffsrumpf nach Anspruch 4, **gekennzeichnet durch** zwei Tragflügel (7), die im Verhältnis zur Mittellinie des Schiffsrumpfes und am Gleichgewichtspunkt des unter Wasser liegenden Rumpfes des Schiffes (1) symmetrisch angeordnet sind, wobei der Gleichgewichtspunkt den Drehpunkt des Schiffes (1) ausmacht.

7. Schiffsrumpf nach Anspruch 5 oder 6, **dadurch gekennzeichnet, dass** die Tragflügel (7) in einem Winkel von ca. 45° nach unten und nach innen gegen die Mitte des Schiffsrumpfes im Verhältnis zur vertikalen Ebene durch die Mittellinie (S) des Schiffsrumpfes angeordnet sind.

8. Schiffsrumpf nach Anspruch 5 oder 6, **dadurch gekennzeichnet, dass** der Gleichgewichtspunkt des oberhalb des Wassers liegenden Rumpfes des Schiffes (1) auf einer Linie rechtwinklig zur Mittellinie (S) des Schiffsrumpfes unmittelbar oberhalb des Drehpunktes des Schiffes (1) liegt.

9. Schiffsrumpf nach einem der Ansprüche 4 bis 8, **dadurch gekennzeichnet, dass** die gesamte Projektionsfläche des Tragflügels (7) ca. 5% der Projektionsfläche des Flügelabschnitts (2) in der Längsrichtung des Schiffsrumpfes ausmacht.

10. Schiffsrumpf nach Anspruch 1 oder 2, **dadurch gekennzeichnet, dass** er vom Trimaran-Typ ist.

11. Schiff (1) mit einem Schiffsrumpf nach einem der Ansprüche 1-10.

12. Schiff nach Anspruch 11, **dadurch gekennzeichnet, dass** es ein elektrisches Antriebssystem mit variabler Geschwindigkeit als Ergänzung zum windbasierten Antriebssystem des Schiffes enthält.

13. Schiff nach Anspruch 11 oder 12, **dadurch gekennzeichnet, dass** die Länge des Schiffes (1) 180,5 m ist, die Höhe des Schiffes (1) 33 m ist, und die Breite des Schiffes (1) 34,2 m ist.

## Revendications

1. Coque de navire, une partie de la coque de navire étant au-dessus de sa ligne de flottaison, la coque de navire située au-dessus de sa ligne de flottaison étant conçue essentiellement comme une section d'une surface portante du type feuille NACA, symétrique à la ligne médiane (S) de la coque de navire et dont le bord d'attaque (3) de la section de la surface portante (2) faisant face dans la direction de l'avant du navire (1), afin de générer, par vent relatif, une portance aérodynamique produisant la propulsion du navire (1) dans un secteur angulaire de l'angle d'attaque (β) entre le vent relatif et le cap ou la direction de propulsion du navire (1), la portance aérodynamique étant compensée par une portance hydrodynamique générée au-dessous de la ligne de flottaison, et la section de la surface portante (2) étant délimitée par des faces respectives supérieure (5) et inférieure (6) au-dessus de la ligne de flottaison faisant saillie à des angles hors de la surface de la section de surface portante (2) sur une partie de la périphérie de la section de la surface portante, et au moins le long du bord d'attaque (3) et d'une portion des côtés de la section de la surface portante (2).

2. Coque de navire selon la revendication 1, **caractérisée en ce que** la feuille NACA est du type NACA 16-018 et que le bord de fuite (4) de la section de la surface portante (2) est coupé à 95% de la longueur de la corde de la section de la surface portante (2).

3. Coque de navire selon la revendication 1 ou 2, **caractérisée en ce que** les angles sont supérieurs ou égaux à 90°.

4. Coque de navire selon la revendication 1 ou 2, **caractérisée en ce que** la portance hydrodynamique est générée par une pluralité d'ailes portantes (7) disposés sous la ligne de flottaison.

5. Coque de navire selon la revendication 4, **caractérisée par** quatre ailes portantes (7) disposées symétriquement par rapport à la ligne médiane (S) de la coque de navire et par rapport au centre de gravité de la coque sous-marine du navire (1), ledit centre de la gravité constituant le point pivot du navire (1).

6. Coque de navire selon la revendication 4, **caractérisée par** deux ailes portantes (7) disposées symétriquement par rapport à la ligne médiane (S) de la coque de navire et au centre de gravité de la coque sous-marine du navire (1), ledit centre de la gravité constituant le point pivot du navire (1).

7. Coque de navire selon la revendication 5 ou 6, **caractérisée en ce que** les ailes portantes (7) sont disposées avec un angle d'environ 45° vers le bas et vers l'intérieur en direction du centre de la coque de navire par rapport à un plan vertical passant par la ligne médiane (S) de la coque de navire.

8. Coque de navire selon la revendication 5 ou 6, **caractérisée en ce que** le centre de gravité de la coque au-dessus d'eau du navire (1) se trouve sur une ligne perpendiculaire à la ligne médiane (S) de la coque du navire, immédiatement au-dessus du point pivot du navire (1).

9. Coque de navire selon l'une quelconque des revendications 4 à 8, **caractérisée en ce que** la surface totale projetée de l'aile portante (7) constitue environ 5% de la surface projetée de la section de surface portante (2) dans la direction longitudinale de la coque de navire.

10. Coque de navire selon la revendication 1 ou 2, **caractérisée en ce qu'**elle est du type trimaran.

11. Navire (1) comprenant une coque de navire selon l'une quelconque des revendications 1 à 10.

12. Navire selon la revendication 11, **caractérisé en ce qu'**il comprend un système de propulsion électrique à vitesse variable pour compléter le système de propulsion du navire basé sur le vent.

13. Navire selon la revendication 12 ou 13, **caractérisé en ce que** la longueur du navire (1) est de 180,5 m, sa hauteur (1) est de 33 m et sa largeur de 34,2 m.
